# EUROPEAN PATENT APPLICATION

(11) **EP 4 650 491 A1**
(43) Date of publication of application: **19.11.2025**
(21) Application number: 24756547.6
(22) Date of filing: 17.01.2024
(51) Int. Cl.: C25B 15/021, C25B 1/042, C25B 1/23, C25B 9/00, C25B 9/19

(54) **ELECTROLYSIS CELL SYSTEM AND ELECTROLYSIS CELL SYSTEM OPERATION METHOD**

(30) Priority: 17.02.2023 JP 2023023741
(71) Applicant: Mitsubishi Heavy Industries, Ltd., Tokyo 100-8332 (JP)
(72) Inventor: KATO, Masayuki, Tokyo 100-8332 (JP); IRIE, Hiroki, Tokyo 100-8332 (JP)
(74) Representative: Hoffmann Eitle
(86) International application number: PCT/JP2024/001073
(87) International publication number: WO 2024/171696

(57) **Abstract**

Provided is an electrolysis cell system with energy efficiency improved. An electrolysis cell system (10) includes: an electrolysis cell (11) that has an anode and a cathode and generates hydrogen on the cathode and oxygen on the anode by electrolyzing steam supplied to the cathode; a supply line (20) that supplies air that controls the temperature of the electrolysis cell (11), to the electrolysis cell (11); an exhaust line (30) through which the air exhausted from the electrolysis cell (11) flows; a circulation line (40) that guides the air exhausted to the exhaust line (30), to the supply line (20); and a supply air temperature control heat exchanger (28) that controls the temperature of the air to be supplied to the electrolysis cell (11).

## Description

### [Technical Field]

The present disclosure relates to an electrolysis cell system and a method for operating the electrolysis cell system.

### [Background Art]

An electrolysis cell that generates hydrogen and oxygen by electrochemically decomposing water is a hydrogen generation method without exhausting carbon dioxide and has superior environmental characteristics. Of these electrolysis cells, a Solid Oxide Electrolysis Cell (SOEC) employs ceramics such as yttria-stabilized zirconia ceramics as an electrolyte to generate hydrogen from high temperature steam as a raw material, which enables high efficiency, compared to other electrolysis cell. Further, in order for decarbonization, co-electrolysis is also possible that directly generates carbon oxide by employing carbon dioxide (CO₂) as a raw material and electrolytic hydrogen as a reducing agent.

A system has been known that generates hydrogen by electrochemically decomposing water disclosed in, for example, Patent Literature 1. Patent Literature 1 discloses a system that includes an anode inlet supply line that supplies anode inlet supply gas containing oxygen to an anode of an electrochemical cell, and an anode side outlet line that exhausts anode outlet gas containing produced oxygen. In this system, a circulation gas suction mechanism is disposed in the anode inlet supply line, and the circulation gas suction mechanism supplies a part of the anode outlet gas as circulation gas to the anode inlet supply gas.

### [Citation List]

### [Patent Literature]

[PTL 1]
Japanese Unexamined Patent Application Publication No. 2008-115430

### [Summary of Invention]

### [Technical Problem]

An electrochemical cell (hereinafter, referred to as an "electrolysis cell") that performs electrolysis needs to be kept in an appropriate temperature range for efficiently performing the electrolysis. Thus, gas (for example, air and the like) to be supplied to the electrolysis cell should be also set to an appropriate temperature. However, the system disclosed in Patent Literature 1 does not consider the temperature of the anode inlet supply gas to be supplied to the electrochemical cell. Accordingly, the efficiency of the electrolysis in the electrolysis cell might be deteriorated.

The present disclosure has been made in view of such circumstances, and the object of the present disclosure is to provide an electrolysis cell system and a method for operating the electrolysis cell system.

### [Solution to Problem]

In order to solve the above-described problems, the electrolysis cell system and the method for operating the electrolysis cell system of the present disclosure employ the following aspects.

An electrolysis cell system according to one aspect of the present disclosure includes: an electrolysis cell that has an anode and a cathode and is configured to generate hydrogen on the cathode and oxygen on the anode by electrolyzing steam supplied to the cathode; a supply line that is configured to supply temperature control fluid that controls the temperature of the electrolysis cell, to the electrolysis cell; an exhaust line through which the temperature control fluid exhausted from the electrolysis cell flows; a circulation line that is configured to guide the temperature control fluid exhausted to the exhaust line, to the supply line; and a temperature control part that is configured to control the temperature of the temperature control fluid to be supplied to the electrolysis cell.

A method for operating an electrolysis cell system according to another aspect of the present disclosure, wherein the electrolysis cell system comprising: an electrolysis cell that has an anode and a cathode and is configured to generate hydrogen on the cathode and oxygen on the anode by electrolyzing steam supplied to the cathode; a supply line that is configured to supply temperature control fluid that controls the temperature of the electrolysis cell, to the electrolysis cell; an exhaust line through which the temperature control fluid exhausted from the electrolysis cell flows; a circulation line that is configured to guide the temperature control fluid exhausted to the exhaust line, to the supply line; and a temperature control part that is configured to control the temperature of the temperature control fluid to be supplied to the electrolysis cell, wherein the supply line includes a pressurizing part that is configured to pressurize the temperature control fluid to be supplied to the electrolysis cell, the method comprising: starting the pressurizing part to pressurize the temperature control fluid to be supplied to the electrolysis cell, to a specified pressure; stopping the pressurizing part after starting the pressurizing part; and heating the temperature control fluid to be supplied to the electrolysis cell, using the temperature control part after starting the pressurizing part.

### [Advantageous Effects of Invention]

According to the present disclosure, an efficiency of the electrolysis in the electrolysis cell can be improved.

### [Brief Description of Drawings]

[Fig. 1]

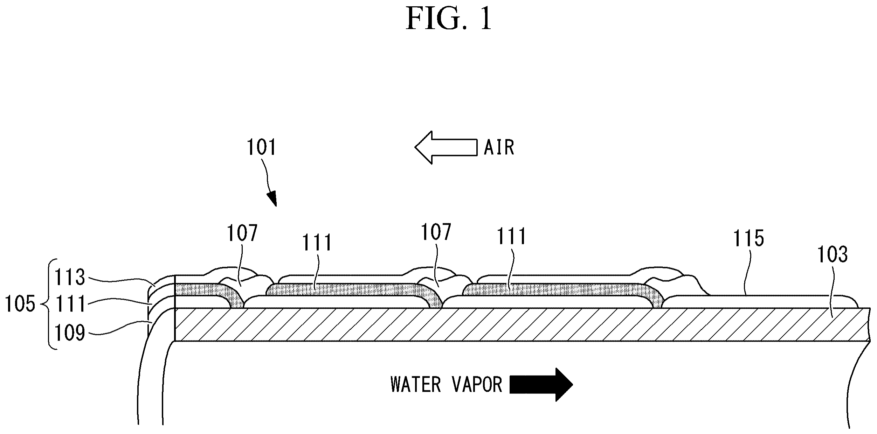

   Fig. 1 shows one aspect of an electrochemical cell stack according to one embodiment of the present disclosure.
[Fig. 2]

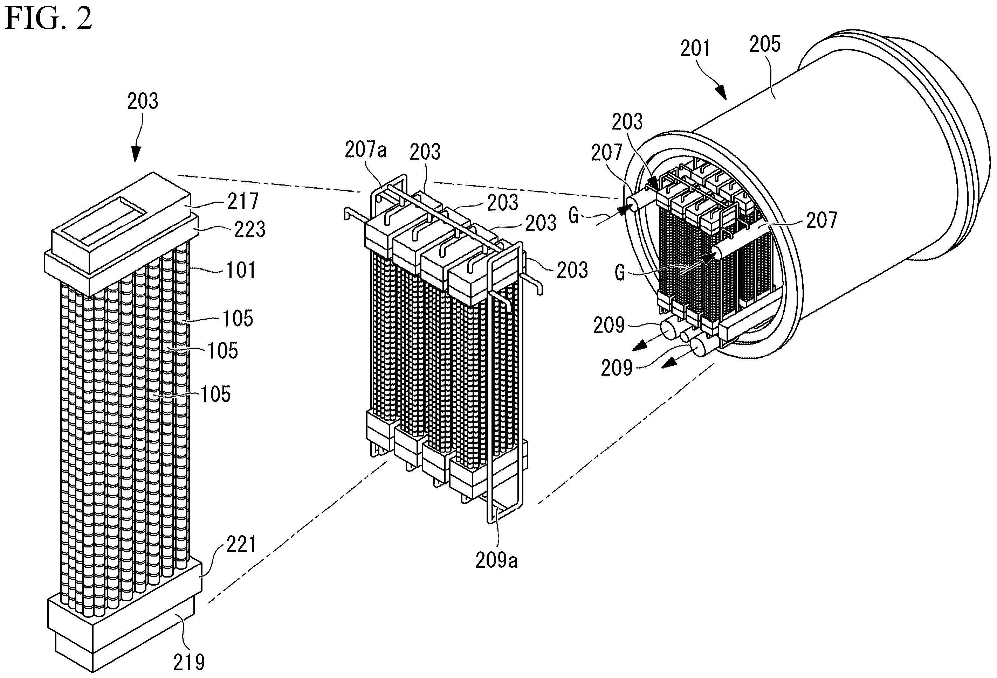

   Fig. 2 shows one aspect of an electrochemical cell module according to the embodiment of the present disclosure.
[Fig. 3]

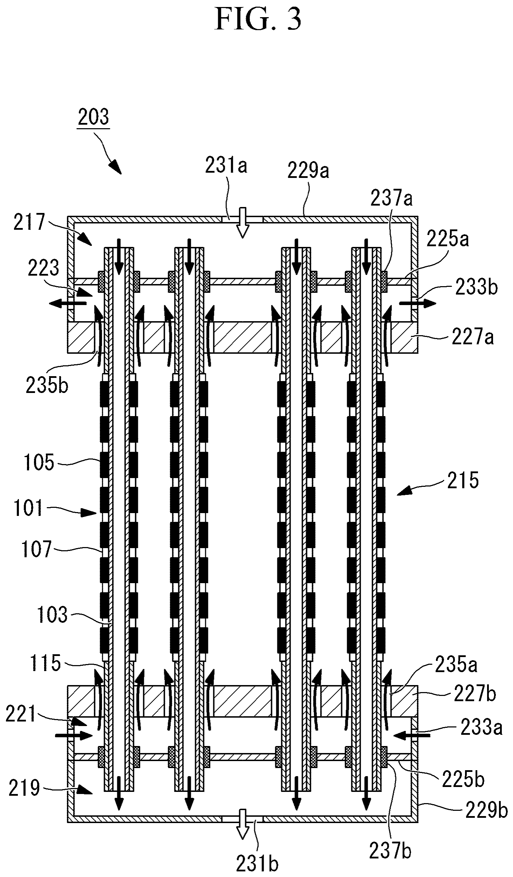

   Fig. 3 shows a cross section of one aspect of an electrochemical cell cartridge according to the embodiment of the present disclosure.
[Fig. 4]

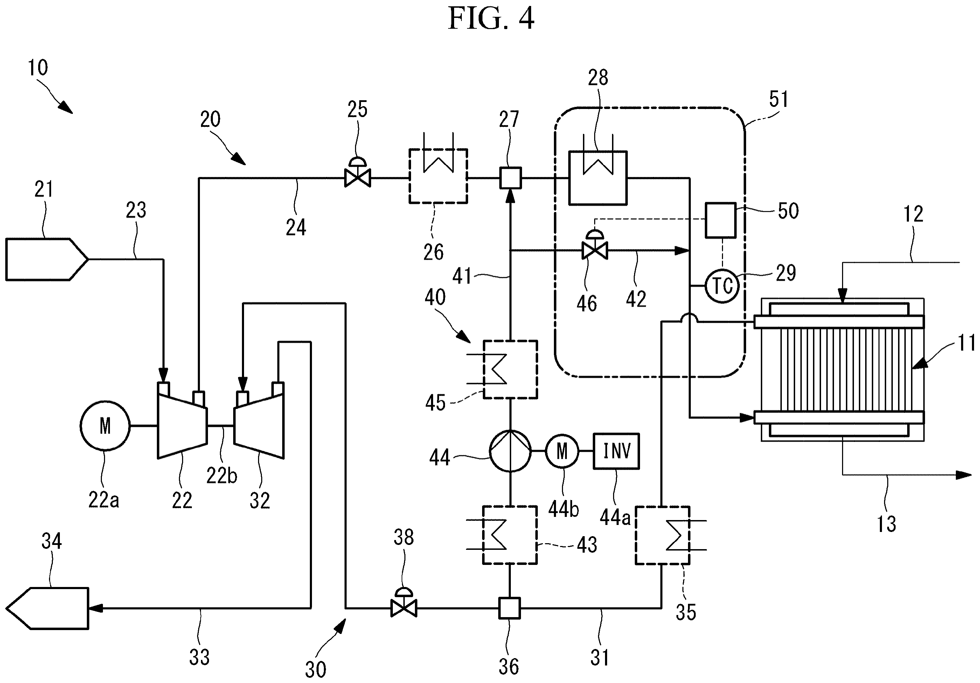

   Fig. 4 shows a schematic configuration of an electrolysis cell system according to a first embodiment of the present disclosure.
[Fig. 5]

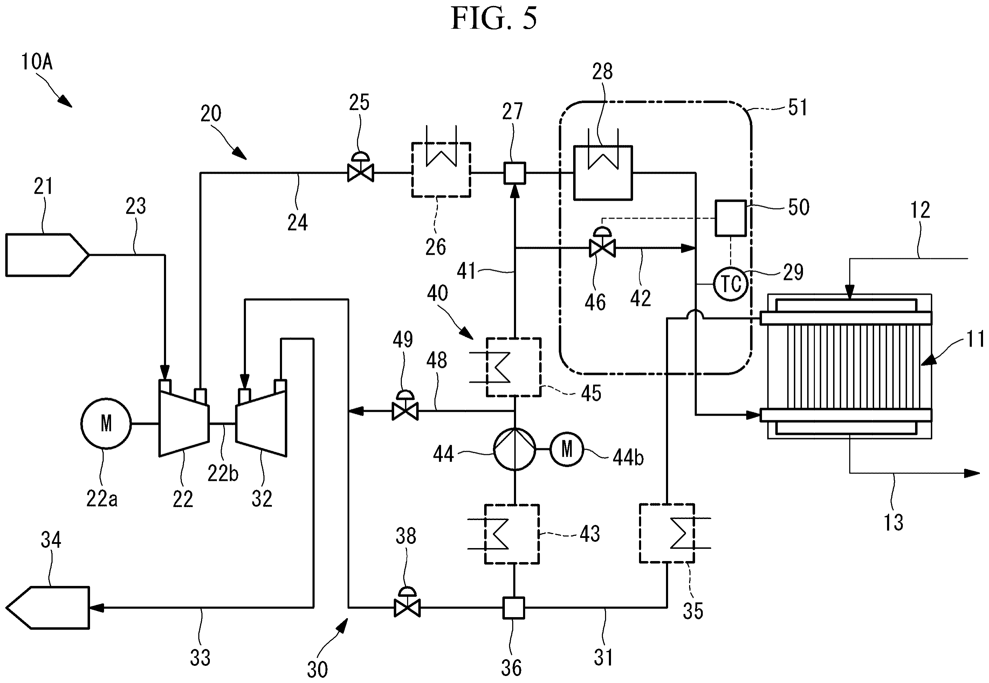

   Fig. 5 shows a schematic configuration of the electrolysis cell system according to a second embodiment of the present disclosure.

### [Description of Embodiments]

Hereinafter, an electrolysis cell system and a method for operating the electrolysis cell system according to embodiments of the present disclosure will be described with reference to the drawings.

First, a Solid Oxide Electrolysis Cell (SOEC) that is installed in an electrolysis cell system according to each of first and second embodiments of the present disclosure will be described with reference to Figs. 1 to 3.

In the following, for convenience of description, the positional relationships between the elements described using the expressions "up" and "down" on the paper surface indicate perpendicularly upper side and perpendicularly lower side, respectively. In the present embodiment, in a case in which a similar effect can be realized in both an up-down direction and a horizontal direction, the up-down direction on the paper surface is not necessarily limited to the perpendicularly up-down direction and may correspond to, for example, the horizontal direction orthogonal to the perpendicular direction.

Hereinafter, although a tubular cylindrical solid oxide electrolysis cell (SOEC) will be described as an example of a cell stack of the solid oxide electrochemical cell, the cell stack is not necessarily limited thereto, and may be, for example, a flat cell stack. The electrolysis cell is formed on a substrate, but an electrode (cathode 109 or anode 113) may be formed thick without the substrate, and may also serve as the support part.

First, a cylindrical cell stack using a substrate tube will be described as an example according to the present embodiment with reference to Fig. 1. In a case in which the substrate tube is not used, for example, the cathode 109 may be formed thick and may also be used as the substrate tube, and thus the substrate tube may not be employed. Further, the substrate tube in the present embodiment will be described using a cylindrical shape, but the substrate tube may be tubular, and the cross section thereof is not necessarily limited to a circular shape, and may be, for example, an elliptical shape. A cell stack having a flat tubular shape or the like in which a peripheral side surface of the cylinder is vertically transposed may be also employed. Here, Fig. 1 shows one aspect of the cell stack according to the present embodiment. A cell stack 101 includes, for example, a cylindrical substrate tube 103, a plurality of electrochemical unit cells 105 formed on an outer peripheral surface of the substrate tube 103, and an interconnector 107 formed between the electrochemical unit cells 105 adjacent to each other. The electrochemical unit cell 105 is formed by laminating the cathode 109, a solid electrolyte film 111 and the anode 113. Further, the cell stack 101 includes a lead film 115 electrically connected via the interconnector 107 to the anode 113 of the electrochemical unit cell 105 formed at one end at the endmost part of the substrate tube 103 in its axial direction, and a lead film 115 electrically connected to the cathode 109 of the electrochemical unit cell 105 formed at the other end at the endmost part, in a plurality of the electrochemical unit cells 105 formed on the outer peripheral surface of the substrate tube 103.

The substrate tube 103 is made of porous material, for example, CaO stabilized ZrO₂ (CSZ), a mixture of CSZ and nickel oxide (NiO), Y₂O₃ stabilized ZrO₂ (YSZ), MgAl₂O₄, or the like as main components. The substrate tube 103 supports the electrochemical unit cell 105, the interconnector 107 and the lead film 115, and diffuses the steam supplied to the inner peripheral surface of the substrate tube 103 to the cathode 109 formed on the outer peripheral surface of the substrate tube 103 through pores of the substrate tube 103.

The cathode 109 is made of an oxide of composite material of Ni and zirconia-based electrolyte material, and, for example, Ni/YSZ is employed. The thickness of the cathode 109 may be 50-250 µm, and the cathode 109 may be formed by screen-printing slurry. In this case, the cathode 109 has Ni which is a component of the cathode 109 and which has a catalytic action on the steam. The catalytic action causes the steam (H₂O), which is supplied through the substrate tube 103, to react and generate a hydrogen molecule (H₂) and an oxygen ion (O²⁻) by the electrolysis.

The solid electrolyte film 111 mainly employ a ceramics oxide (for example, YSZ) having airtightness that makes it difficult for gas to pass and high oxygen ionic conductivity at high temperature. The solid electrolyte film 111 transfers the oxygen ions (O²⁻) generated on the cathode 109 to the anode 113. The film thickness of the solid electrolyte film 111 positioned on the surface of the cathode 109 may be 10-100 µm, and the solid electrolyte film 111 may be formed by screen-printing slurry.

The anode 113 is made of, for example, a LaSrMnO₃-based oxide or a LaCoO₃-based oxide, and the anode 113 may be formed by screen-printing slurry or applying slurry using a dispenser. The anode 113 causes the oxygen ion, which is transferred from the cathode 109 through the solid electrolyte film 111, at the boundary with the solid electrolyte film 111 to discharge an electron by an electrolytic reaction and generates oxygen from the oxygen atoms bonded to each other. The oxygen generated on the anode 113 joins the oxidizing gas (cooling fluid) that flows through a reaction chamber 215 and generates the oxygen-enriched oxidizing gas.

The oxidizing gas is gas containing approximately 15-30% oxygen, and representatively, air is suitable. However, in addition to air, mixed gas of combustion exhaust gas and air, mixed gas of oxygen and air, and the like may be employed.

The interconnector 107 is made of a conductive perovskite type oxide represented by M₁₋ₓLₓTiO₃ (M is alkaline earth metal element and L is lanthanoid element) such as SrTiO₃, and is formed by screen-printing slurry. The interconnector 107 is dense film such that the steam and the oxidizing gas do not mix with each other. The interconnector 107 has stable durability and electric conductivity under both oxidizing atmosphere and reducing atmosphere. The interconnector 107 electrically connects the anode 113 of one electrochemical unit cell 105 and the cathode 109 of the other electrochemical unit cell 105 in the electrochemical unit cells 105 adjacent to each other, and connects the electrochemical unit cells 105 adjacent to each other in series.

Since the lead film 115 needs to have electron conductivity and to have a similar thermal expansion coefficient to those of other materials forming the cell stack 101, the lead film 115 is made of composite material of Ni and zirconia-based electrolyte material such as Ni/YSZ or M₁₋ₓLₓTiO₃ (M is alkaline earth metal element and L is lanthanoid element) such as SrTiO₃. The lead film 115 supplies electric power necessary for the electrolytic reaction to a plurality of the electrochemical unit cells 105 connected by the interconnector 107 to each other in series.

The substrate tube 103 on which the slurry film of the cathode 109, the solid electrolyte film 111, and the interconnector 107 is formed is co-sintered in the atmosphere. The sintering temperature is, for example, 1350-1450°C.

Next, the substrate tube 103 on which the slurry film of the anode 113 is formed is sintered in the atmosphere on the co-sintered substrate tube 103. The sintering temperature is, for example, 1100-1250°C. The sintering temperature here is lower than the co-sintering temperature after forming the substrate tube 103 to the interconnector 107.

Next, an electrochemical cell cartridge and an electrochemical cell module according to the present embodiment will be described with reference to Figs. 2 and 3. Here, Fig. 2 shows one aspect of the solid oxide electrolysis cell (SOEC) module according to the present embodiment. Fig. 3 shows a sectional view of one aspect of the solid oxide electrolysis cell (SOEC) cartridge according to the present embodiment.

As shown in Fig. 2, an SOEC module (electrochemical cell module) 201 includes, for example, a plurality of SOEC cartridges (electrochemical cell cartridges) 203 and a module vessel 205 that stores the SOEC cartridges 203 therein. Although a cylindrical SOEC cell stack 101 is shown as an example in Fig. 2, the cell stack is not limited thereto, and may be, for example, a flat cell stack. The SOEC module 201 includes a steam supply pipe 207, a plurality of steam supply branch pipes 207a, a steam exhaust pipe 209, and a plurality of steam exhaust branch pipes 209a. Further, the SOEC module 201 includes an oxidizing gas supply pipe (not shown), an oxidizing gas supply branch pipe (not shown), an oxidizing gas exhaust pipe (not shown), and a plurality of oxidizing gas exhaust branch pipes (not shown).

The steam supply pipe 207 is disposed in the module vessel 205, connected to a steam supply unit for supplying steam having a specified flow rate in accordance with the electrolysis amount of the SOEC module 201, and connected to the steam supply branch pipes 207a. The steam supply pipe 207 branches off to the steam supply branch pipes 207a to guide the specified flow rate of steam G supplied from the above-described steam supply unit, to each of the steam supply branch pipes 207a. The steam supply branch pipe 207a is connected to the steam supply pipe 207 and is connected to the SOEC cartridges 203. The steam supply branch pipe 207a guides the steam supplied from the steam supply pipe 207 to the SOEC cartridges 203 at a substantially uniform flow rate, and makes the electrolysis performance of the SOEC cartridges 203 substantially uniform.

The steam exhaust branch pipe 209a is connected to the SOEC cartridges 203 and the steam exhaust pipe 209. The steam exhaust branch pipe 209a guides hydrogen-enriched steam (hereinafter, referred to as "exhaust steam") exhausted from the SOEC cartridge 203, to the steam exhaust pipe 209. The steam exhaust pipe 209 is connected to the steam exhaust branch pipes 209a. A portion of the steam exhaust pipe 209 is disposed outside the module vessel 205. The steam exhaust pipe 209 guides the exhaust steam that flows out from the steam exhaust branch pipe 209a at a substantially uniform flow rate, to the outside of the module vessel 205.

Since the module vessel 205 is operated at internal pressure of a range between the atmosphere and approximately 3 MPa and at internal temperature of a range between the atmospheric temperature and approximately 550°C, material is employed that has pressure resistance and corrosion resistance against oxidant such as oxygen in the oxidizing gas. For example, stainless-based material such as SUS304 is suitable.

Here, in the present embodiment, an aspect in which the SOEC cartridges 203 are assembled and stored in the module vessel 205 is described, but the present invention is not limited thereto, and an aspect in which the SOEC cartridges 203 are stored in the module vessel 205 without being assembled can also be employed.

As shown in Fig. 3, the SOEC cartridge 203 includes a plurality of the cell stacks 101, a reaction chamber 215, a steam supply header 217, a steam exhaust header 219, an oxidizing gas supply header 221, and an oxidizing gas exhaust header 223. Further, the SOEC cartridge 203 includes an upper tube plate 225a, a lower tube plate 225b, an upper thermal insulation 227a, and a lower thermal insulation 227b. In the present embodiment, the SOEC cartridge 203 has a structure in which the steam supply header 217, the steam exhaust header 219, the oxidizing gas supply header 221, and the oxidizing gas exhaust header 223 are arranged as shown in Fig. 3, so that the steam and the oxidizing gas flow in directions opposite to each other at the inner side and the outer side of the cell stack 101, respectively, but this structure is not necessary. For example, a structure may be employed in which the steam and the oxidizing gas flow in parallel in the same direction at the inner side and the outer side of the cell stack 101, respectively, or in which the oxidizing gas flow in a direction orthogonal to a longitudinal direction of the cell stack 101.

The reaction chamber 215 is a region formed between the upper thermal insulation 227a and the lower thermal insulation 227b. The reaction chamber 215 is a region where the electrochemical unit cells 105 of the cell stack 101 are arranged, and is a region where the electrolysis is performed by causing the steam to electrochemically reacting. The temperature in the vicinity of a center portion of the reaction chamber 215 in the longitudinal direction of the cell stack 101 may be monitored by a temperature measurement unit (temperature sensor, thermocouple, or the like). The temperature becomes a high temperature atmosphere of approximately 700-1000°C during the steady operation of the SOEC module 201.

The steam supply header 217 is a region surrounded by an upper casing 229a and the upper tube plate 225a of the SOEC cartridge 203, and is communicated with the steam supply branch pipes 207a through a steam supply hole 231a formed in an upper portion of the upper casing 229a. The cell stacks 101 are coupled to the upper tube plate 225a by a seal member 237a. The steam supply header 217 guides the steam supplied from the steam supply branch pipe 207a through the steam supply hole 231a, into the substrate tubes 103 of the cell stacks 101 at substantially uniform flow rate, and makes the electrolysis performance of the cell stacks 101 substantially uniform.

The steam exhaust header 219 is a region surrounded by a lower casing 229b and the lower tube plate 225b of the SOEC cartridge 203, and is communicated with the steam exhaust branch pipe 209a (not shown) through a steam exhaust hole 231b formed in the lower casing 229b. The cell stacks 101 are coupled to the lower tube plate 225b by a seal member 237b. The steam exhaust header 219 collects the exhaust steam that passes through the inside of the substrate tubes 103 of the cell stacks 101 and that is supplied to the steam exhaust header 219, and guides the exhaust steam to the steam exhaust branch pipe 209a through the steam exhaust hole 231b.

The oxidizing gas having a specified gas composition and a specified flow rate is distributed to the oxidizing gas supply branch pipes in accordance with the electrolysis amount of the SOEC module 201 and is supplied to the SOEC cartridges 203. The oxidizing gas supply header 221 is a region surrounded by the lower casing 229b, the lower tube plate 225b, and the lower thermal insulation 227b of the SOEC cartridge 203, and is communicated with the oxidizing gas supply branch pipe (not shown) through an oxidizing gas supply hole 233a formed on a side surface of the lower casing 229b. The oxidizing gas supply header 221 guides a specified flow rate of the oxidizing gas supplied from the oxidizing gas supply branch pipe (not shown) through the oxidizing gas supply hole 233a, to the reaction chamber 215 through an oxidizing gas supply gap 235a which will be described later.

The oxidizing gas exhaust header 223 is a region surrounded by the upper casing 229a, the upper tube plate 225a, and the upper thermal insulation 227a of the SOEC cartridge 203, and is communicated with an oxidizing gas exhaust branch pipe (not shown) through an oxidizing gas exhaust hole 233b formed on a side surface of the upper casing 229a. The oxidizing gas exhaust header 223 guides the oxygen-enriched oxidizing gas (hereinafter, referred to as "exhaust oxidizing gas") supplied from the reaction chamber 215 to the oxidizing gas exhaust header 223 through an oxidizing gas exhaust gap 235b which will be described later, to the oxidizing gas exhaust branch pipe (not shown) through the oxidizing gas exhaust hole 233b.

The upper tube plate 225a is fixed to a side plate of the upper casing 229a such that the upper tube plate 225a, a top plate of the upper casing 229a, and the upper thermal insulation 227a are substantially parallel to each other, between the top plate of the upper casing 229a and the upper thermal insulation 227a. The upper tube plate 225a has a plurality of holes corresponding to the number of the cell stacks 101 installed in the SOEC cartridge 203. The cell stacks 101 are respectively inserted into the holes. The upper tube plate 225a airtightly supports one end portion of the cell stacks 101 via one or both of the seal member 237a and an adhesive member, and isolates the steam supply header 217 and the oxidizing gas exhaust header 223 from each other.

The upper thermal insulation 227a is disposed in a lower end portion of the upper casing 229a such that the upper thermal insulation 227a, the top plate of the upper casing 229a, and the upper tube plate 225a are substantially parallel to each other, and is fixed to the side plate of the upper casing 229a. The upper thermal insulation 227a has a plurality of holes corresponding to the number of the cell stacks 101 installed in the SOEC cartridge 203. The diameter of the hole is set to be larger than the outer diameter of the cell stack 101. The upper thermal insulation 227a includes the oxidizing gas exhaust gap 235b formed between an inner surface of the hole and an outer surface of the cell stack 101 inserted into the upper thermal insulation 227a.

The upper thermal insulation 227a separates the reaction chamber 215 and the oxidizing gas exhaust header 223 from each other, so that the strength deterioration caused by the temperature increase of the atmosphere around the upper tube plate 225a, or an increase in corrosion due to the oxidant in the oxidizing gas, is suppressed. In order to suppress the thermal deformation of the upper tube plate 225a and the like due to the temperature difference caused when the upper tube plate 225a and the like are exposed to a high temperature in the reaction chamber 215, the upper tube plate 225a and the like may be made of high temperature durable metallic material such as Ni-based alloy. The upper thermal insulation 227a guides the exhaust oxidizing gas that has passed through the reaction chamber 215 and that has been exposed to the high temperature, to the oxidizing gas exhaust header 223 through the oxidizing gas exhaust gap 235b.

According to the present embodiment, due to the structure of the above-described SOEC cartridge 203, the steam and the exhaust oxidizing gas flow in the directions opposite to each other at the inner side and the outer side of the cell stack 101, respectively. Accordingly, the exhaust oxidizing gas exchanges heat with the steam supplied to the reaction chamber 215 through the inside of the substrate tube 103, and then the exhaust oxidizing gas is cooled to temperature at which deformation such as buckling of the upper tube plate 225a and the like made of the metallic material does not occur and is supplied to the oxidizing gas exhaust header 223. The temperature of the steam increases via the heat exchange with the exhaust oxidizing gas exhausted from the reaction chamber 215, and then the steam is supplied to the reaction chamber 215. As a result, it is possible to supply the steam that is preheated to the temperature suitable for the electrolysis without using a heater or the like, to the reaction chamber 215.

The lower tube plate 225b is fixed to a side plate of the lower casing 229b such that the lower tube plate 225b, a bottom plate of the lower casing 229b, and the lower thermal insulation 227b are substantially parallel to each other, between the bottom plate of the lower casing 229b and the lower thermal insulation 227b. The lower tube plate 225b has a plurality of holes corresponding to the number of the cell stacks 101 installed in the SOEC cartridge 203. The cell stacks 101 are respectively inserted into the holes. The lower tube plate 225b airtightly supports the other end portion of the cell stacks 101 via one or both of the seal member 237b and an adhesive member, and isolates the steam exhaust header 219 and the oxidizing gas supply header 221 from each other.

The lower thermal insulation 227b is disposed in an upper end portion of the lower casing 229b such that the lower thermal insulation 227b, the bottom plate of the lower casing 229b, and the lower tube plate 225b are substantially parallel to each other, and is fixed to the side plate of the lower casing 229b. The lower thermal insulation 227b has a plurality of holes corresponding to the number of the cell stacks 101 installed in the SOEC cartridge 203. The diameter of the hole is set to be larger than the outer diameter of the cell stack 101. The lower thermal insulation 227b includes the oxidizing gas supply gap 235a formed between an inner surface of the hole and the outer surface of the cell stack 101 inserted into the lower thermal insulation 227b.

The lower thermal insulation 227b separates the reaction chamber 215 and the oxidizing gas supply header 221 from each other, so that the strength deterioration caused by the temperature increase of the atmosphere around the lower tube plate 225b, or an increase in corrosion due to the oxidant in the oxidizing gas, is suppressed. The lower tube plate 225b and the like are made of high temperature durable metallic material such as Inconel, so as to prevent the thermal deformation thereof caused when the lower tube plate 225b and the like are exposed to the high temperature and the temperature difference in the lower tube plate 225b and the like increases. The lower thermal insulation 227b guides the oxidizing gas supplied to the oxidizing gas supply header 221, to the reaction chamber 215 through the oxidizing gas supply gap 235a.

According to the present embodiment, due to the structure of the above-described SOEC cartridge 203, the steam and the oxidizing gas flow in the directions opposite to each other at the inner side and the outer side of the cell stack 101, respectively. Accordingly, the exhaust steam that has passed through the reaction chamber 215 through the inside of the substrate tube 103 exchanges heat with the oxidizing gas supplied to the reaction chamber 215, and then the exhaust steam is cooled to temperature at which deformation such as buckling of the lower tube plate 225b and the like made of metallic material does not occur and is supplied to the steam exhaust header 219. The temperature of the oxidizing gas increases via the heat exchange with the exhaust steam, and the oxidizing gas is supplied to the reaction chamber 215.

The DC power required for the electrolysis reaction in the reaction chamber 215 is supplied to the SOEC module 201 after converting the AC power supplied from a power supply system into the DC power by a power conversion device (inverter, etc.) such as a power conditioner (not shown). The SOEC cartridges 203 are electrically connected to the SOEC module 201 at a specified number of series or parallel so as to supply the DC power to the electrochemical unit cells 105 via the lead film 115 disposed in the end portion of the cell stack 101.

### FIRST EMBODIMENT

Next, an electrolysis cell system 10 according to a first embodiment of the present disclosure will be described with reference to Fig. 4. Fig. 4 shows a pressurized type electrolysis cell system as an example, but the electrolysis cell system is not limited thereto, and may be applied to a normal pressure type electrolysis cell system. Further, air is described as an example of the temperature control fluid, but other oxidizing gas may be also employed.

As shown in Fig. 4, the electrolysis cell system 10 includes the above-described solid oxide electrolysis cell (hereinafter, referred to as an "electrolysis cell 11").

Further, the electrolysis cell system 10 includes a supply line 20 that supplies air (temperature control fluid) to the electrolysis cell 11, an exhaust line 30 that exhausts the air exhausted from the electrolysis cell 11 to an outside of the system, and a circulation line 40 that guides the air in the exhaust line 30 to the supply line 20. Further, the electrolysis cell system 10 includes a control unit 50.

As described above, the electrolysis cell 11 electrolyzes the steam supplied through a first steam pipe 12 to generate hydrogen and oxygen. The generated hydrogen is exhausted together with the steam that has not been electrolyzed, through a second steam pipe 13. Thus, the hydrogen-enriched steam is exhausted from the electrolysis cell 11. The first steam pipe 12 is connected to the steam supply pipe 207 (see Fig. 2). The second steam pipe 13 is connected to the steam exhaust pipe 209 (see Fig. 2).

As shown in Fig. 4, cooling air (temperature control fluid) is supplied to the electrolysis cell 11 through a second air supply pipe 24 which will be described later. Oxygen generated in the electrolysis cell 11 is exhausted together with air from the electrolysis cell 11 through a first exhaust air pipe 31 which will be described later. Thus, oxygen-enriched air is exhausted from the electrolysis cell 11. Further, air at temperature higher than the supplied air, is exhausted. In the following, the air exhausted from the electrolysis cell 11 may be also referred to as "exhaust air". The first air supply pipe 23 is connected to an oxidizing gas supply pipe (not shown). The first exhaust air pipe 31 is connected to an oxidizing gas exhaust pipe (not shown).

The supply line 20 includes an air supply part 21, a compressor (pressurizing part) 22 that compresses the air supplied from the air supply part 21, the first air supply pipe 23 that guides the air from the air supply part 21 to the compressor 22, and a second air supply pipe 24 that guides the air compressed by the compressor 22 to the electrolysis cell 11.

The compressor 22 is connected to a motor 22a to be driven by driving power of the motor 22a. The compressor 22 compresses the air supplied from the air supply part 21 through the first air supply pipe 23. The compressor 22 discharges the compressed air to the second air supply pipe 24. The compressor 22 is coupled to a turbine 32 and a rotational shaft 22b which will be described later. The compressor 22 pressurizes the air to the pressure of 0.2 MPa or more. The compressor 22 may pressurize the air to the pressure of 1 MPa or more.

The first air supply pipe 23 connects the air supply part 21 and the compressor 22.

The second air supply pipe 24 connects the compressor 22 and the electrolysis cell 11. A supply air flow control valve 25, a mixing part 27, a supply air temperature control heat exchanger (temperature control part) 28, and a temperature sensor 29 are disposed in the second air supply pipe 24 in this order from the upstream side thereof. As shown by a dashed line, a supply air cooler (temperature control part) 26 may be disposed between the supply air flow control valve 25 and the mixing part 27.

The supply air flow control valve 25 controls the flow of the air that flows through the second air supply pipe 24 by controlling the opening of the supply air flow control valve 25. The opening of the supply air flow control valve 25 is controlled by the control unit 50.

The supply air cooler 26 exchanges heat with a coolant to cool the air that flows through the second air supply pipe 24 toward the electrolysis cell 11.

The mixing part 27 mixes the exhaust air from the circulation line 40, which will be described later, and the air that flows through the second air supply pipe 24.

The supply air temperature control heat exchanger 28 exchanges heat with the coolant so as to control the temperature of the air that flows through the second air supply pipe 24 toward the electrolysis cell 11.

The temperature sensor 29 measures the temperature of the air that flows through the second air supply pipe 24 toward the electrolysis cell 11. Specifically, the temperature sensor 29 measures the temperature of the air that has passed through the supply air temperature control heat exchanger 28 and then joined with the air in a branch air pipe 42 which will be described later. The temperature sensor 29 transmits the data of the measured temperature to the control unit 50.

The exhaust line 30 includes the first exhaust air pipe 31 through which the exhaust air exhausted from the electrolysis cell 11 flows, the turbine 32 to which a downstream end of the first exhaust air pipe 31 is connected, a second exhaust air pipe 33 through which the exhaust air exhausted from the turbine 32 flows, and an exhaust air exhaust part 34 that exhausts the exhaust air that has flows through the second exhaust air pipe 33, to an outside of the system.

The first exhaust air pipe 31 connects the electrolysis cell 11 and the turbine 32. The first exhaust air pipe 31 guides the exhaust air exhausted from the electrolysis cell 11, to the turbine 32. A branch part 36 and an exhaust air pressure control valve 38 are disposed in the first exhaust air pipe 31 in this order from the upstream side thereof. As shown by a dashed line, an exhaust air cooler (temperature control part) 35 may be disposed at the upstream side relative to the branch part 36.

The exhaust air cooler 35 exchanges heat with the coolant so as to cool the exhaust air that flows through the first exhaust air pipe 31.

The branch part 36 distributes a part of the exhaust air that flows through the first exhaust air pipe 31, to the circulation line 40.

The exhaust air pressure control valve 38 controls the pressure of the exhaust air that flows through the first exhaust air pipe 31, by controlling the opening of the exhaust air pressure control valve 38. The opening of the exhaust air pressure control valve 38 is controlled by the control unit 50.

The turbine 32 is rotated by the exhaust air supplied thereto. When the turbine 32 is rotated, the rotational shaft 22b coupled to the turbine 32 is rotated. When the rotational shaft 22b is rotated, the compressor 22 to which the rotational shaft 22b is coupled is rotated. In this manner, the turbine 32 drives the compressor 22 using the supplied exhaust air, so that the power for compressing air is reduced.

The second exhaust air pipe 33 connects the turbine 32 and the exhaust air exhaust part 34.

The circulation line 40 supplies the exhaust air of the exhaust line 30 to the supply line 20. The amount of the air supplied by the circulation line 40 may be a part of the air to be supplied from the supply line 20 to the electrolysis cell 11, or the whole of the air to be supplied from the supply line 20 to the electrolysis cell 11. In a case in which the whole of the air is supplied, the air supply part 21 and the compressor 22 are stopped, and the supply air flow control valve 25 and the exhaust air pressure control valve 38 are closed.

The circulation line 40 includes a circulation air pipe 41 that connects the first exhaust air pipe 31 and the second air supply pipe 24, and a branch air pipe 42 that branches off from the circulation air pipe 41.

The circulation air pipe 41 connects the branch part 36 disposed in the first exhaust air pipe 31 and the mixing part 27 disposed in the second air supply pipe 24. The circulation air pipe 41 guides the exhaust air that flows through the first exhaust air pipe 31, to the second air supply pipe 24. In other words, the circulation air pipe 41 guides the air (exhaust air) at an outlet side of the electrolysis cell 11, to an inlet side of the electrolysis cell 11.

A blower 44 is disposed in the circulation air pipe 41. As shown by a dashed line, a circulation air cooler (temperature control part) 43 may be disposed at the upstream side relative to the blower 44. Further, a circulation air heater (temperature control part) 45 may be disposed at the downstream side relative to the blower 44.

The blower 44 pressurizes the air that flows through the circulation air pipe 41 and guides the exhaust air that flows through the first exhaust air pipe 31, to the second air supply pipe 24. The blower 44 is driven by a motor 44b. The rotation speed of the motor 44b is controlled by an inverter 44a.

The circulation air cooler 43 exchanges heat with the coolant so as to cool the air that flows through the circulation air pipe 41.

The circulation air heater 45 heats the air that flows through the circulation air pipe 41, using heat applied from the outside. Examples of a device that applies heat from the outside include an electric heater and a burner. For example, the burner may be configured to cause a part of the hydrogen generated in the electrolysis cell system 10 to react (burn) with the oxidizing gas. In a case in which the burner employs a device that burns fuel using a general burner, it is necessary to additionally dispose a device that supplies fuel, and carbon dioxide is exhausted. However, in a case in which the burner employs a burner that burns hydrogen generated in the electrolysis cell system 10, the device that supplies fuel is not necessary, which simplifies the configuration thereof. In addition, the exhaust of the carbon dioxide can be suppressed.

The branch air pipe 42 connects the circulation air pipe 41 and the second air supply pipe 24. Specifically, a downstream end of the branch air pipe 42 is connected to the second air supply pipe 24 at a downstream side relative to the supply air temperature control heat exchanger 28. The branch air pipe 42 is disposed to bypass the supply air temperature control heat exchanger 28. The branch air pipe 42 guides the air that flows through the circulation air pipe 41, to the downstream side of the second air supply pipe 24 relative to the supply air temperature control heat exchanger 28.

A supply air temperature control valve 46 is disposed in the branch air pipe 42. The supply air temperature control valve 46 controls the flow of the air that flows through the branch air pipe 42, by controlling the opening of the supply air temperature control valve 46. The opening of the supply air temperature control valve 46 is controlled by the control unit 50.

The supply air temperature control heat exchanger 28 disposed in the supply line 20, the temperature sensor 29, the branch air pipe 42 disposed in the circulation line 40, the supply air temperature control valve 46, and the control unit 50 may be included in a temperature control system (temperature control part) 51 that controls the temperature of the air to be supplied to the electrolysis cell 11.

The temperature control system 51 controls the opening of the supply air temperature control valve 46 via the control unit 50, based on the temperature of the supply air measured by the temperature sensor 29. The temperature control system 51 controls the opening of the supply air temperature control valve 46 so as to control the amount of the air that passes through the supply air temperature control heat exchanger 28 and the amount of the air that bypasses the supply air temperature control heat exchanger 28, so that the temperature of the air to be supplied to the electrolysis cell 11 is controlled.

The control unit 50 controls the openings of the valves, and the start/stop and the rotation speed of the blower 44.

The control unit 50 (controller) includes, for example, a CPU (Central Processing Unit: processor), a main storage device (Main Memory), and a secondary storage device (Secondary storage: memory). Further, the control unit 50 may include a communication part that transmits and receives information to/from other device.

The main storage device is formed by, for example, a writable memory such as memory cash and RAM (Random Access Memory). The main storage device is used as a working area for reading an execution program for the CPU and writing a processing data by the execution program.

The secondary storage device is a non-transitory computer readable storage medium. The secondary storage device may be, for example, a magnetic disk, a magneto-optical disk, a CD-ROM, a DVD-ROM, a semiconductor memory or the like.

A series of processes for realizing each function is stored in the form of a program in the secondary storage device. The CPU reads the program into the main storage device and executes information processing and arithmetic processing, so that each function is realized. The program may be installed in advance in the secondary storage device, provided by a computer-readable storage medium that stores the program therein, or delivered via wired or wireless communication means. The computer-readable storage medium may be a magnetic disk, a magneto-optical disk, a CD-ROM, a DVD-ROM, a semiconductor memory or the like.

Next, a method for operating the electrolysis cell system 10 according to the present embodiment will be described.

In the present embodiment, in the starting of the electrolysis cell system 10, first, the electrolysis cell system 10 starts the motor 22a and starts the compressor 22 while controlling the pressure difference between a steam line (the first steam pipe 12 and the like) and the supply line 20 to pressurize the air to be supplied to the electrolysis cell 11 to a specified pressure (starting pressurizing part process). Next, the electrolysis cell system 10 gradually stops the compressor 22, so that the air supply part 21 is activated and the opening of the supply air flow control valve 25 and the opening of the exhaust air pressure control valve 38 are controlled (stopping pressuring part process). Next, the electrolysis cell system 10 activates the circulation air heater 45 (for example, an electric heater, a burner that burns hydrogen and oxygen or the like) and heats the air to be supplied to the electrolysis cell 11 using the temperature control part such as the temperature control system 51 (heating process).

The electrolysis cell system 10 is configured such that the temperature control part such as the circulation air heater 45 heats the air also when the electrolysis cell 11 performs the electrolysis at a thermal neutral point or less (electrolyzing process at thermal neutral point or less). The thermal neutral point means a point where the heat required for the electrolysis of the steam and the heat generated by the electrolysis cell 11 are balanced.

Further, the electrolysis cell system 10 is configured such that the temperature control part such as the circulation air cooler 43 cools the air when the electrolysis cell 11 performs the electrolysis at the thermal neutral point or more (electrolyzing process at thermal neutral point or more). At this time, recovery heat of the circulation air recovered by the temperature control part such as the circulation air cooler 43 can be used for generating or heating the steam to be supplied to the electrolysis cell 11.

Further, the electrolysis cell system 10 exhausts the air from the exhaust line 30 while keeping the pressure of the air that flows through the electrolysis cell 11 in a specified range when the electrolysis cell 11 performs the electrolysis (exhausting process).

According to the present embodiment, the following advantageous effects are realized.

In the present embodiment, the circulation line 40 is installed that guides the air exhausted to the exhaust line 30, to the supply line 20. Thus, the air exhausted from the electrolysis cell 11 can be reused via the circulation line 40. Accordingly, the amount of the air to be supplied to the electrolysis cell system 10 can be reduced, compared to a configuration that does not reuse the air exhausted to the exhaust line 30, so that the energy efficiency of the whole system can be improved.

Further, in the present embodiment, the temperature control part such as the temperature control system 51 is installed that controls the temperature of the air to be supplied to the electrolysis cell 11. Thus, in a configuration that circulates the air exhausted to the circulation line 40 to the supply line 20, the temperature of the air to be supplied to the electrolysis cell 11 can be controlled and the recovery heat can be used as a heat supply source of the steam for the electrolysis. Accordingly, in a case in which the temperature of the air is controlled by the temperature control part (for example, the temperature control system 51 and the like) such that the temperature of the electrolysis cell 11 becomes an appropriate temperature for performing the electrolysis, the efficiency of the electrolysis by the electrolysis cell 11 and the efficiency of the system can be improved.

In the present embodiment, the temperature control part (for example, the temperature control system 51 and the like) is disposed in the supply line 20 and/or the circulation line 40. Thus, the temperature control part can be disposed at the upstream side relative to the electrolysis cell 11, compared to a configuration in which, for example, the temperature control part is disposed in the exhaust line 30. Accordingly, the temperature of the electrolysis cell 11 can be easily controlled.

In the present embodiment, the temperature control part includes the circulation line temperature control part (for example, the circulation air cooler 43, the circulation air heater 45 and the like) disposed in the circulation line 40. Thus, the air that flows through the circulation line 40 can be cooled and heated by the circulation line temperature control part. Accordingly, in the driving process such as the starting and the electrolysis operating, the temperature of the air to be supplied to the electrolysis cell 11 can be freely controlled.

In the present embodiment, the supply line 20 includes the compressor 22 that pressurizes the air to be supplied to the electrolysis cell 11. Thus, the pressurized air is supplied to the electrolysis cell 11. A volumetric flow is reduced by pressurizing the air, so that the whole system including the electrolysis cell 11 can be made compact.

The electrolysis cell 11 needs to be set in an appropriate temperature range for performing the electrolysis for a long period of time. In the present embodiment, as described above, the temperature control part such as the temperature control system 51 is installed that controls the temperature of the air to be supplied to the electrolysis cell 11 from the circulation line 40 in addition to the supply line 20. A high-pressure system needs power for pressurizing the air (temperature control fluid), but, by using the air supplied from the circulation line 40 for controlling the temperature of the electrolysis cell 11, the amount of the air to be pressurized for the temperature control in the electrolysis can be reduced in the high-pressure system.

In the present embodiment, the circulation line 40 includes the blower 44. Accordingly, the air in the exhaust line 30 can be appropriately guided to the supply line 20 via the circulation line 40.

The pressure loss in the circulation line 40 (for example, the electrolysis cell 11, the circulation air cooler 43, the circulation air heater 45, the supply air temperature control valve 46, a piping and the like) is small enough compared to the pressurizing pressure by the compressor 22, so that the power required for the pressuring in the whole system can be reduced. In addition, the compressor 22 can be made compact.

In the present embodiment, the thermal energy of the air recovered by the exhaust heat recovery part (for example, the supply air temperature control heat exchanger 28 and the like) is used for generating or heating the steam to be supplied to the electrolysis cell 11. Thus, the energy efficiency of the whole system can be improved compared to a configuration that does not use the recovery heat of the air.

An example of a case in which the air to be supplied to the electrolysis cell 11 is cooled includes a case in which the electrolysis cell system 10 performs the electrolysis operation. An example of a case in which the electrolysis cell system 10 performs the electrolysis operation includes a case in which the electrolysis cell system 10 operates when the temperature of the electrolysis cell 11 is the thermal neutral point or more.

In the present embodiment, the temperature control part (for example, the temperature control system 51 and the like) heats the air in the starting or a low-load operation of the electrolysis cell 11. Thus, the temperature of the electrolysis cell 11 can be kept or increased in the starting or the low-load operation of the electrolysis cell 11. Accordingly, the efficiency of the electrolysis of the electrolysis cell 11 can be improved.

An example of the low-load operation of the electrolysis cell 11 includes a case in which the electrolysis cell system 10 operates when the temperature of the electrolysis cell 11 is less than the thermal neutral point.

In the present embodiment, the exhaust line 30 includes the turbine 32 that is rotated by the air exhausted from the electrolysis cell 11. Thus, the power can be recovered from the air exhausted from the electrolysis cell 11. Accordingly, in a case in which the power recovered by the turbine 32 is used in the electrolysis cell system 10, the energy efficiency of the whole system can be improved.

The present embodiment includes a stopping pressurizing part process that stops the compressor 22 after the starting pressurizing part process, and a heating process that heats the air to be supplied to the electrolysis cell 11 using the temperature control part (for example, the temperature control system 51 and the like) after the starting pressurizing part process. Thus, after the pressurizing of the system is completed, the air can be heated by an air heating part without supplying air from the outside. Accordingly, the power consumption can be reduced compared to a configuration that does not stop the compressor 22.

When the electrolysis cell 11 operates at the thermal neutral point or less, the heat generated in the electrolysis cell 11 is short relative to the heat required for the electrolysis reaction.

The present embodiment may include the electrolyzing process at the thermal neutral point or less in which the temperature control part (for example, the temperature control system 51 and the like) heats the air in the circulation line 40 when the electrolysis cell 11 performs the electrolysis at the thermal neutral point or less. Thus, when the electrolysis cell 11 performs the electrolysis at the thermal neutral point or less, the temperature of the electrolysis cell 11 can be kept or increased using the heated air. Accordingly, the electrolysis can be performed even in the low-load operation of the electrolysis cell 11 at the thermal neutral point or less.

In the present embodiment, the recovery heat of the air is used for generating or heating the steam to be supplied the electrolysis cell 11. Thus, the energy efficiency of the whole system can be improved, compared to a configuration that does not use the recovery heat of the air.

The present embodiment includes the exhausting process that supplies the set amount of the air from the supply line 20 and exhausts the air from the exhaust line 30 while keeping the pressure of the air that flows through the electrolysis cell 11 in a specified range. Thus, an excessive increase of the density of the oxygen in the supply line 20 can be suppressed. Accordingly, the corrosion due to the oxidizing of the metallic material in the electrolysis cell 11 can be suppressed and the safety thereof can be improved.

### SECOND EMBODIMENT

Next, an electrolysis cell system according to a second embodiment of the present disclosure will be described with reference to Fig. 5.

An electrolysis cell system 10A according to the present embodiment includes a flow control pipe 48 instead of the inverter 44a, which is different from the above-described first embodiment. Other configurations are similar to the first embodiment, and thus the configuration similar to the first embodiment is given the same numeral as in the first embodiment and the detailed description thereof will be omitted.

As shown in Fig. 5, the circulation line 40 of the electrolysis cell system 10A includes the flow control pipe 48 that branches off from between the blower 44 and the circulation air heater 45. The flow control pipe 48 connects the circulation air pipe 41 and the first exhaust air pipe 31. Specifically, the flow control pipe 48 connects the circulation air pipe 41 and a portion of the first exhaust air pipe 31 at a downstream side relative to the exhaust air pressure control valve 37. The flow control pipe 48 guides the air that flows through the circulation air pipe 41, to the first exhaust air pipe 31.

A flow control valve 49 is disposed in the flow control pipe 48. The flow control valve 49 controls the flow of the air that flows through the flow control pipe 48, by controlling the opening of the flow control valve 49. The opening of the flow control valve 48 is controlled by the control unit 50.

The control unit 50 controls the opening of the flow control valve 49 to control the amount of the air toward the supply line 20 through the circulation line 40.

The present disclosure is not limited to the above-described embodiments, and can be appropriately modified within the nature of the present invention.

For example, in each of the above-described embodiments, the air is circulated to the supply line 20 by the blower 44 disposed in the circulation line 40, but a device that circulates the air is not limited to the blower 44. The device that circulates the air may be, for example, an ejector.

In each of the above-described embodiments, an example is described that the flow control in the circulation line 40 is performed by the inverter 44a (see Fig. 4) of the motor 22a or the flow control valve 49 (see Fig. 5), but the present disclosure is not limited thereto. For example, the flow control in the circulation line 40 may be performed by controlling an inlet vane or controlling a vane angle of an axial fan.

In each of the above-described embodiments, an example is described that the compressor 22 is disposed in the supply line 20, but the present disclosure is not limited thereto. A configuration may be employed that the air at the atmospheric pressure is slightly pressurized and then supplied to the electrolysis cell 11 from the supply line 20 without disposing a device that pressurizes the air in the supply line 20.

The electrolysis cell system and the method for operating the electrolysis cell system in the above-described embodiments are realized, for example, as below.

An electrolysis cell system according to a first aspect of the present disclosure includes: an electrolysis cell (11) that has an anode (109) and a cathode (113) and generates hydrogen on the cathode (113) and oxygen on the anode (109) by electrolyzing steam supplied to the cathode (113); a supply line (20) that supplies temperature control fluid that controls the temperature of the electrolysis cell (11), to the electrolysis cell (11); an exhaust line (30) through which the temperature control fluid exhausted from the electrolysis cell (11) flows; a circulation line (40) that guides the temperature control fluid exhausted to the exhaust line (30), to the supply line (20); and a temperature control part (28) that controls the temperature of the temperature control fluid to be supplied to the electrolysis cell (11).

The above-described aspect includes the circulation line that guides the temperature control fluid exhausted to the exhaust line, to the supply line. Thus, the temperature control fluid exhausted from the electrolysis cell can be reused in the supply line. Accordingly, the energy efficiency of the whole of the electrolysis cell system can be improved, compared to a configuration that does not use the temperature control fluid exhausted to the exhaust line.

Further, the above-described aspect includes the temperature control part that controls the temperature of the temperature control fluid to be supplied to the electrolysis cell. Thus, in the configuration in which the temperature control fluid exhausted to the circulation line is circulated to the supply line, the temperature of the temperature control fluid to be supplied to the electrolysis cell can be controlled. Accordingly, in a case in which the temperature of the temperature control fluid is controlled by the temperature control part such that the temperature of the electrolysis cell is set to a temperature suitable for performing the electrolysis, the efficiency of the electrolysis by the electrolysis cell can be improved. Further, the heat recovered by the temperature control part is used as a generation heat source of the steam for the electrolysis, so that the energy efficiency of the whole system can be improved.

As an electrolysis cell system according to a second aspect of the present disclosure, in addition to the first aspect, the temperature control part (28) is disposed in the supply line (20) and/or the circulation line (40).

**In** the above-described aspect, the temperature control part is disposed in the supply line and/or the circulation line. Thus, the temperature control part can be disposed at the upstream side relative to the electrolysis cell, compared to a configuration in which, for example, the temperature control part is disposed in the exhaust line. Accordingly, the temperature of the electrolysis cell can be controlled easily.

As an electrolysis cell system according to a third aspect of the present disclosure, in addition to the second aspect, the temperature control part (28) includes a circulation line temperature control part (28) that is disposed in the circulation line (40).

In the above-described aspect, the temperature control part includes the circulation line temperature control part disposed in the circulation line. Thus, the temperature of the temperature control fluid that flows through the circulation line can be controlled by the circulation line temperature control part. Accordingly, in each operation process from the starting to the electrolysis operation, the temperature of the temperature control fluid to be supplied to the electrolysis cell can be controlled.

As an electrolysis cell system according to a fourth aspect of the present disclosure, in addition to any one of the first to third aspects, the circulation line (40) includes a blower (44).

In the above-described aspect, the circulation line includes the blower. Thus, a temperature control flow that flows through the circulation line can be pressurized. Accordingly, the temperature control fluid in the exhaust line can be appropriately guided to the supply line via the circulation line.

As an electrolysis cell system according to a fifth aspect of the present disclosure, in addition to any one of the first to fourth aspects, the temperature control part (28) includes a heat recovery part that recovers heat of the temperature control fluid when cooling the temperature control fluid to be supplied to the electrolysis cell (11), and the heat recovered by the heat recovery part is used for generating or heating steam to be supplied to the electrolysis cell (11).

In the above-described aspect, the heat of the temperature control fluid recovered by the heat recovery part is used for generating or heating the steam to be supplied to the electrolysis cell. Thus, the energy efficiency of the whole system can be improved, compared to a configuration that does not use the heat of the temperature control fluid.

An example of the case that cools the temperature control fluid to be supplied to the electrolysis cell includes a case in which the electrolysis cell system performs a normal operation. An example of the case in which the electrolysis cell system performs the normal operation includes a case in which the electrolysis cell system operates when the temperature of the electrolysis cell is the thermal neutral point or more (electrolyzing process at the thermal neutral point or more).

As an electrolysis cell system according to a sixth aspect of the present disclosure, in addition to any one of the first to fifth aspects, the temperature control part (28) heats the temperature control fluid in the starting or a low-load operation of the electrolysis cell (11).

In the above-described aspect, the temperature control part heats the temperature control fluid in the starting or the low-load operation of the electrolysis cell. Thus, in the starting or the low-load operation of the electrolysis cell, the temperature of the electrolysis cell can be kept or increased. Accordingly, the efficient of the electrolysis in the electrolysis cell can be improved.

An example of the low-load operation of the electrolysis cell includes a case in which the electrolysis cell system operates when the temperature of the electrolysis cell is less than the thermal neutral point.

As an electrolysis cell system according to a seventh aspect of the present disclosure, in addition to any one of the first to sixth aspect, the supply line (20) includes a pressurizing part (22) that pressurizes the temperature control fluid to be supplied to the electrolysis cell (11).

In the above-described aspect, the supply line includes the pressurizing part that pressurizes the temperature control fluid to be supplied to the electrolysis cell. Thus, the pressurized temperature control fluid is supplied to the electrolysis cell. Accordingly, the whole system including the electrolysis cell can be made compact.

Further, since the pressurized temperature control fluid is supplied to the electrolysis cell, the electrolysis cell operates in a pressurized state, and thus the pressure of the temperature control fluid exhausted to the exhaust line is high. Thus, the high pressure of the temperature control fluid that flows in the supply line from the exhaust line via the circulation line can be kept only by supplementing the pressure loss in the circulation line. Accordingly, an amount of the temperature control fluid supplied from the outside of the system can be reduced and the power of the pressurizing part can be reduced, compared to a configuration that does not include the circulation line. Thus, the running cost thereof can be reduced. Further, the pressurizing part can be made compact.

As an electrolysis cell system according to an eighth aspect of the present disclosure, in addition to the seventh aspect, the exhaust line (30) includes a turbine that is rotated by the temperature control fluid exhausted from the electrolysis cell (11).

In the above-described aspect, the exhaust line includes the turbine that is rotated by the temperature control fluid exhausted from the electrolysis cell. Thus, power can be recovered from the temperature control fluid exhausted from the electrolysis cell. Accordingly, in a case in which the power recovered by the turbine is used in the electrolysis cell system, the energy efficiency of the whole system can be improved.

An example of a device that uses the power recovered by the turbine includes the pressurizing part that pressurizes the temperature control fluid to be supplied to the electrolysis cell.

A method for operating an electrolysis cell system according to a first aspect of the present disclosure is a method for operating an electrolysis cell system (10) that includes: an electrolysis cell (11) that has an anode (109) and a cathode (113) and generates hydrogen on the cathode (113) and oxygen on the anode (109) by electrolyzing steam supplied to the anode (113); a supply line (20) that supplies temperature control fluid that controls the temperature of the electrolysis cell (11), to the electrolysis cell (11); an exhaust line (30) through which the temperature control fluid exhausted from the electrolysis cell (11) flows; a circulation line (40) that guides the temperature control fluid exhausted to the exhaust line (30), to the supply line (20); and a temperature control part (28) that controls the temperature of the temperature control fluid to be supplied to the electrolysis cell (11), and wherein the supply line (20) includes a pressurizing part (22) that pressurizes the temperature control fluid to be supplied to the electrolysis cell (11), the method including: starting the pressurizing part (22) to pressurize the temperature control fluid to be supplied to the electrolysis cell (11), to a specified pressure; stopping the pressurizing part (22) after starting the pressurizing part (22); and heating the temperature control fluid to be supplied to the electrolysis cell (11), using the temperature control part (28) after starting the pressurizing part (22).

The above-described aspect includes stopping the pressurizing part after starting the pressurizing part, and heating the temperature control fluid to be supplied to the electrolysis cell, using the temperature control part after starting the pressurizing part. Thus, the temperature control fluid can be heated by the temperature control fluid heater after the temperature control fluid is pressurized. Accordingly, the power consumption can be reduced, compared to a method that does not stop the pressurizing part.

A method for operating the electrolysis cell system according to a second aspect of the present disclosure further includes, in addition to the first aspect, heating the temperature control fluid using the temperature control part (28) when the electrolysis cell (11) performs the electrolysis at the thermal neutral point or less.

When the electrolysis cell operates at the thermal neutral point or less, an amount of the heat is short for generating the steam to be supplied to the electrolysis cell.

The above-described aspect includes heating the temperature control fluid using the temperature control part when the electrolysis cell performs the electrolysis at the thermal neutral point or less. Thus, when the electrolysis cell performs the electrolysis at the thermal neutral point or less, the temperature of the electrolysis cell can be kept or increased by the temperature control fluid. Accordingly, the electrolysis can be performed even in a low-load operation at the thermal neutral point or less of the electrolysis cell 11.

A method for operating the electrolysis cell system according to a third aspect of the present disclosure further includes, in addition to the first or second aspect, cooling the temperature control fluid using the temperature control part (28) when the electrolysis cell (11) performs the electrolysis at the thermal neutral point or more, and using exhaust heat of the temperature control fluid recovered in cooling the temperature control part, to generate or heat the steam to be supplied to the electrolysis cell (11).

In the above-described aspect, the recovery heat of the temperature control fluid is used to generate or heat the steam to be supplied to the electrolysis cell. Thus, the energy efficiency of the whole system can be improved, compared to a method that does not use the recovery heat of the temperature control fluid.

A method for operating the electrolysis cell system according to a fourth aspect of the present disclosure further includes, in addition to any one of the first to third aspects, supplying a set amount of air from the supply line 20 and exhausting the air from the exhaust line 30 while keeping the pressure of the air that flows through the electrolysis cell 11 in a specified range when electrolysis cell (11) performs the electrolysis.

The above-described aspect includes exhausting the temperature control fluid from the exhaust line while keeping the pressure of the temperature control fluid that flows through the supply line in a specified range. Thus, an excessive increase of the density of the oxygen in the air line can be suppressed. Accordingly, the corrosion due to the oxidizing of the metallic material in the electrolysis cell 11 can be suppressed and the safety thereof can be improved.

### [Reference Signs List]

- 10: electrolysis cell system
- 10A: electrolysis cell system
- 11: electrolysis cell
- 12: first steam pipe
- 13: second steam pipe
- 20: supply line
- 21: air supply part
- 22: compressor (pressurizing part)
- 22a: motor
- 22b: rotational shaft
- 23: first air supply pipe
- 24: second air supply pipe
- 25: supply air flow control valve
- 26: supply air cooler
- 27: mixing part
- 28: supply air temperature control heat exchanger (temperature control part)
- 29: temperature sensor
- 30: exhaust line
- 31: first exhaust air pipe
- 32: turbine
- 33: second exhaust air pipe
- 34: exhaust air exhaust part
- 35: exhaust air cooler
- 36: branch part
- 38: exhaust air pressure control valve
- 40: circulation line
- 41: circulation air pipe
- 42: branch air pipe
- 43: circulation air cooler (temperature control part)
- 44: blower
- 44a: inverter
- 44b: motor
- 45: circulation air heater (temperature control part)
- 46: supply air temperature control valve
- 48: flow control pipe
- 49: flow control valve
- 50: control unit
- 51: temperature control system
- 101: cell stack
- 103: substrate pipe
- 105: electrochemical unit cell
- 107: interconnector
- 109: cathode
- 111: solid electrolyte film
- 113: anode
- 115: lead film
- 201: SOEC module
- 203: SOEC cartridge
- 205: module vessel
- 207: steam supply pipe
- 207a: steam supply branch pipe
- 209: steam exhaust pipe
- 209a: steam exhaust branch pipe
- 215: reaction chamber
- 217: steam supply header
- 219: steam exhaust header
- 221: oxidizing gas supply header
- 223: oxidizing gas exhaust header
- 225a: upper tube plate
- 225b: lower tube plate
- 227a: upper thermal insulation
- 227b: lower thermal insulation
- 229a: upper casing
- 229b: lower casing
- 231a: steam supply hole
- 231b: steam exhaust hole
- 233a: oxidizing gas supply hole
- 233b: oxidizing gas exhaust hole
- 235a: oxidizing gas supply gap
- 235b: oxidizing gas exhaust gap
- 237a: seal member
- 237b: seal member

## Claims

1. An electrolysis cell system comprising:
an electrolysis cell that has an anode and a cathode and is configured to generate hydrogen on the cathode and oxygen on the anode by electrolyzing steam supplied to the cathode;
a supply line that is configured to supply temperature control fluid that controls the temperature of the electrolysis cell, to the electrolysis cell;
an exhaust line through which the temperature control fluid exhausted from the electrolysis cell flows;
a circulation line that is configured to guide the temperature control fluid exhausted to the exhaust line, to the supply line; and
a temperature control part that is configured to control the temperature of the temperature control fluid to be supplied to the electrolysis cell.

2. The electrolysis cell system as defined in claim 1, wherein the temperature control part is disposed in the supply line and/or the circulation line.

3. The electrolysis cell system as defined in claim 2, wherein the temperature control part includes a circulation line temperature control part that is disposed in the circulation line.

4. The electrolysis cell system as defined in claim 1, wherein the circulation line includes a blower.

5. The electrolysis cell system as defined in claim 1, wherein:
the temperature control part includes a heat recovery part that is configured to recover heat of the temperature control fluid when cooling the temperature control fluid to be supplied to the electrolysis cell, and
the heat recovered by the heat recovery part is used for generating or heating steam to be supplied to the electrolysis cell.

6. The electrolysis cell system as defined in claim 1, wherein the temperature control part is configured to heat the temperature control fluid in the starting or a low-load operation of the electrolysis cell.

7. The electrolysis cell system as defined in claim 1, wherein the supply line includes a pressurizing part that is configured to pressurize the temperature control fluid to be supplied to the electrolysis cell.

8. The electrolysis cell system as defined in claim 7, wherein the exhaust line includes a turbine that is rotated by the temperature control fluid exhausted from the electrolysis cell.

9. A method for operating an electrolysis cell system, wherein
the electrolysis cell system comprising:
an electrolysis cell that has an anode and a cathode and is configured to generate hydrogen on the cathode and oxygen on the anode by electrolyzing steam supplied to the cathode;
a supply line that is configured to supply temperature control fluid that controls the temperature of the electrolysis cell, to the electrolysis cell;
an exhaust line through which the temperature control fluid exhausted from the electrolysis cell flows;
a circulation line that is configured to guide the temperature control fluid exhausted to the exhaust line, to the supply line; and
a temperature control part that is configured to control the temperature of the temperature control fluid to be supplied to the electrolysis cell,
and wherein the supply line includes a pressurizing part that is configured to pressurize the temperature control fluid to be supplied to the electrolysis cell,
the method comprising:
starting the pressurizing part to pressurize the temperature control fluid to be supplied to the electrolysis cell, to a specified pressure;
stopping the pressurizing part after starting the pressurizing part; and
heating the temperature control fluid to be supplied to the electrolysis cell, using the temperature control part after starting the pressurizing part.

10. The method for operating the electrolysis cell system as defined in claim 9, further comprising heating the temperature control fluid using the temperature control part when the electrolysis cell performs the electrolysis at the thermal neutral point or less.

11. The method for operating the electrolysis cell system as defined in claim 9, further comprising:
cooling the temperature control fluid using the temperature control part when the electrolysis cell performs the electrolysis at the thermal neutral point or more, and
using exhaust heat of the temperature control fluid recovered in cooling the temperature control fluid, to generate or heat the steam to be supplied to the electrolysis cell.

12. The method for operating the electrolysis cell system as defined in claim 9, further comprising exhausting the temperature control fluid from the exhaust line while keeping the pressure of the temperature control fluid that flows through the supply line, in a specified range when electrolysis cell performs the electrolysis.
